# EUROPEAN PATENT APPLICATION

(11) **EP 4 660 959 A1**
(43) Date of publication of application: **10.12.2025**
(21) Application number: 23919609.0
(22) Date of filing: 30.01.2023
(51) Int. Cl.: G06T 19/00

(54) **METAVERSE MANAGEMENT DEVICE, METAVERSE MANAGEMENT METHOD AND COMPUTER PROGRAM**

(71) Applicant: Sony Interactive Entertainment Inc., Tokyo 108-0075 (JP)
(72) Inventor: KANG Mihee, Tokyo 108-0075 (JP); MATSUI Yasunori, Tokyo 108-0075 (JP); TANAKA Kazuharu, Tokyo 108-0075 (JP); MURASUGI Ryota, Tokyo 108-0075 (JP)
(74) Representative: D Young & Co LLP
(86) International application number: PCT/JP2023/002887
(87) International publication number: WO 2024/161464

(57) **Abstract**

A metaverse server 12 includes an entrance management section 30 and a performance control section 46. The entrance management section 30 manages entrance of a user to a metaverse. The performance control section 46 causes a performance of informing another user of the entrance of the user to be presented in the metaverse, when the user who has entered the metaverse satisfies a predetermined condition.

## Description

### [Technical Field]

The present invention relates to a data processing technology, and in particular, relates to a metaverse management device, a metaverse management method, and a computer program.

### [Background Art]

A metaverse which is a service providing a three-dimensional virtual space constructed in a computer is gradually becoming popular. For example, a user moves his/her own avatar in the metaverse and interacts with other users or participates in events held in the metaverse.

### [Summary]

### [Technical Problem]

Metaverses are expected to increase in number in the coming future, and the inventors of the present application have assumed that the success or failure in the metaverse business depends on the number of users that can be drawn in. One object of the present invention is to provide a technology for assisting a metaverse in drawing in more users.

### [Solution to Problem]

In order to solve the problem described above, a metaverse management device according to a mode of the present invention includes an entrance management section that manages entrance of a user to a metaverse, and a performance control section that causes a performance of informing another user of the entrance of the user to be presented in the metaverse, when the user who has entered the metaverse satisfies a predetermined condition.

Another mode of the present invention lies in a metaverse management method. In this method, a computer executes a step of managing entrance of a user to a metaverse, and a step of causing a performance of informing another user of the entrance of the user to be presented, when the user who has entered the metaverse satisfies a predetermined condition.

Note that any combinations of the constituent elements described above and expressions obtained by converting the expressions of the present invention between systems, computer programs, recording media in which the computer programs are stored, and the like are also effective as the modes of the present invention.

### [Advantageous Effects of Invention]

The present invention can assist a metaverse in drawing in more users.

### [Brief Description of Drawings]

[FIG. 1]

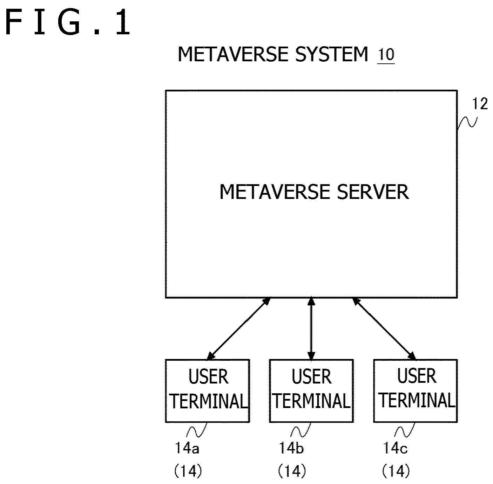

   FIG. 1 is a view illustrating a configuration of a metaverse system according to a first embodiment.
[FIG. 2]

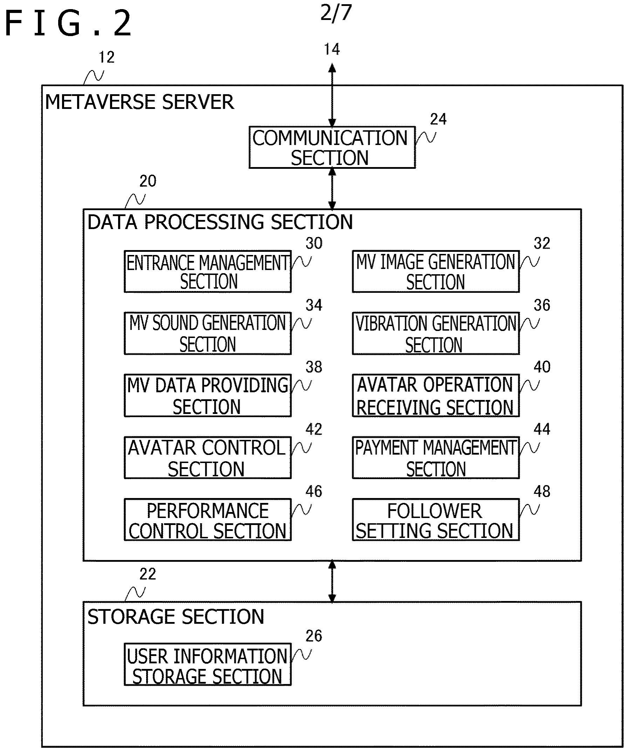

   FIG. 2 is a block diagram illustrating main functional blocks of a metaverse server according to the first embodiment.
[FIG. 3]

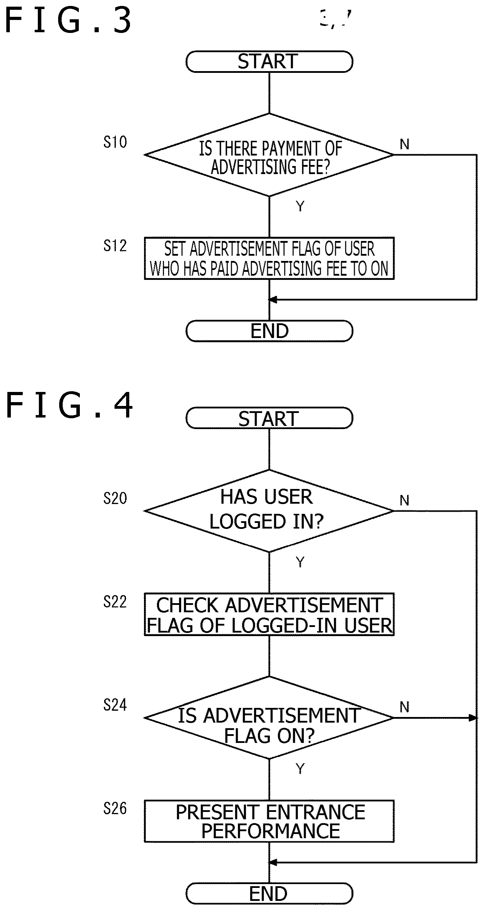

   FIG. 3 is a flowchart illustrating an operation of the metaverse server according to the first embodiment.
[FIG. 4]
   FIG. 4 is a flowchart illustrating the operation of the metaverse server according to the first embodiment.
[FIG. 5]

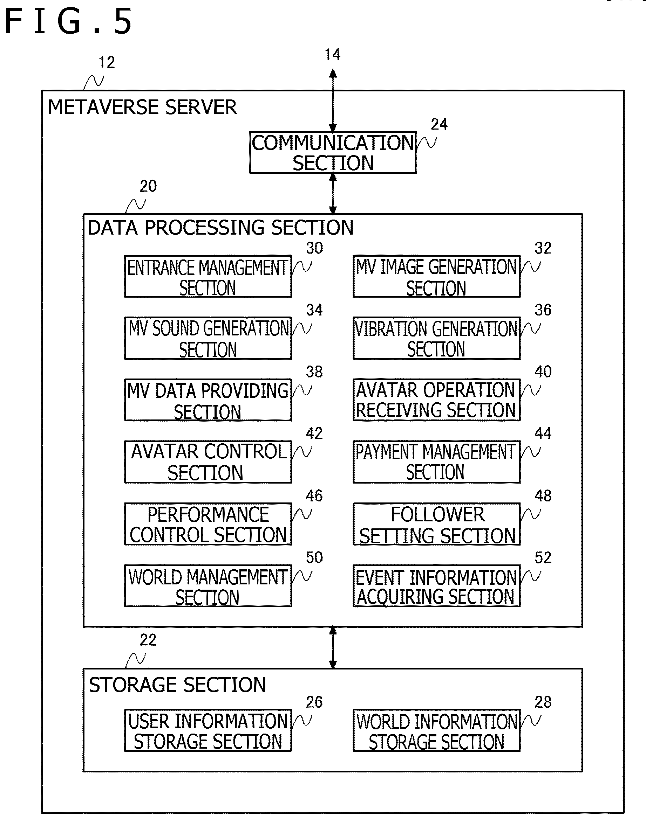

   FIG. 5 is a block diagram illustrating a main functional blocks of the metaverse server according to a second embodiment.
[FIG. 6]

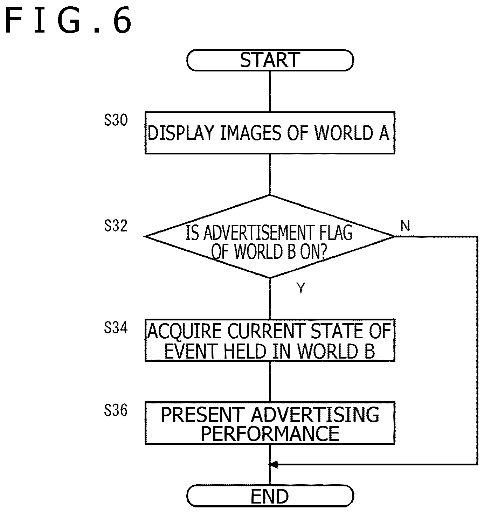

   FIG. 6 is a flowchart illustrating an operation of the metaverse server according to the second embodiment.
[FIG. 7]

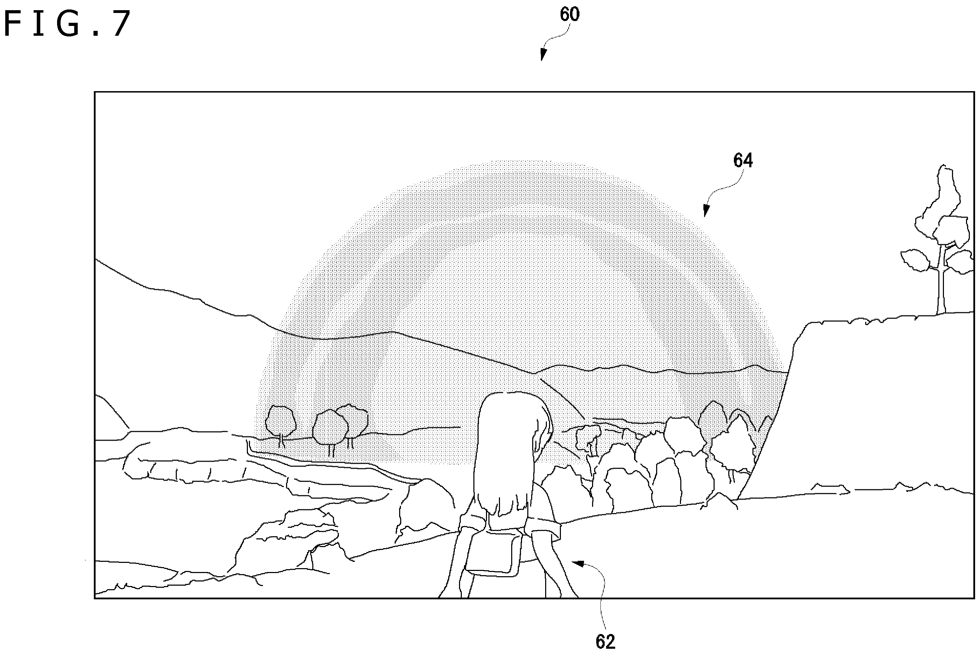

   FIG. 7 is a view illustrating an example of an advertising performance.
[FIG. 8]

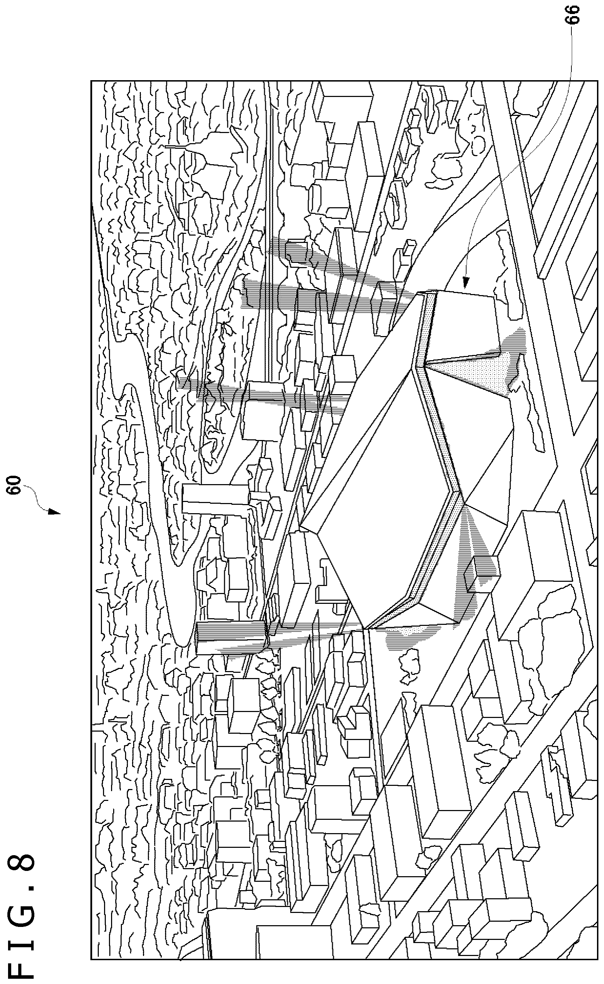

   FIG. 8 is a view illustrating an example of an advertising performance.

### [Description of Embodiments]

An outline of embodiments will first be described. A metaverse according to the embodiments is a three-dimensional virtual space (also called a cyberspace) and a service providing the space. A user who participates in a metaverse moves, in the metaverse, an avatar which is a character serving as a double of the user and interacts with other users or participates in events held in the metaverse. Under the situation where metaverses are expected to increase in number, the success or failure in the metaverse business depends on the number of users that can be drawn in. In a first embodiment and a second embodiment described below, a technology for assisting metaverses in drawing in more users will be proposed.

### <First embodiment>

In a metaverse management system according to the first embodiment, a mechanism for making a specific user stand out in the metaverse by running an advertisement for the specific user in the metaverse is provided. This mechanism assists the metaverse in enhancing its appeal and in drawing in more users.

FIG. 1 illustrates a configuration of a metaverse system 10 according to the first embodiment. The metaverse system 10 is an information processing system that provides a metaverse service to a plurality of users. The metaverse system 10 includes a metaverse server 12 and a plurality of user terminals 14. These devices are connected via a communication network including a local area network (LAN), a wide area network (WAN), the Internet, and the like.

The metaverse server 12 is an information processing device that manages the metaverse service and its users. The metaverse server 12 provides images and sounds of the metaverse to the users who have subscribed to the metaverse and who use the metaverse. The images of the metaverse include at least a video of the metaverse. Moreover, the images of the metaverse may be what are generally called virtual reality images or augmented reality images.

The plurality of user terminals 14 are information terminals operated by users different from one another. Each of the user terminals 14 may be a personal computer (PC), a smartphone, a tablet terminal, a stationary game console, a portable game console, or a head-mounted display. Further, each of the user terminals 14 may include a display device, a speaker, and a controller (operation device).

FIG. 2 is a block diagram illustrating main functional blocks of the metaverse server 12 according to the first embodiment. While the blocks illustrated in the block diagram of the present specification can be implemented by devices and electronic circuits including a processor, a central processing unit (CPU), and a memory of a computer and mechanical equipment, in terms of hardware, and by computer programs and the like loaded to a memory, in terms of software, the blocks illustrated here are functional blocks implemented by cooperation between them. Hence, a person skilled in the art would understand that these functional blocks can be realized in various forms by a combination of hardware and software.

The metaverse server 12 includes a data processing section 20, a storage section 22, and a communication section 24. The data processing section 20 executes various kinds of data processing related to the metaverse service. The storage section 22 stores the data referred to or updated by the data processing section 20. The communication section 24 communicates with an external device in accordance with a predetermined communication protocol. The data processing section 20 transmits and receives data to and from the plurality of user terminals 14 via the communication section 24.

The storage section 22 includes a user information storage section 26. The user information storage section 26 stores information related to the plurality of users who belong to the metaverse, i.e., stores information related to the plurality of users who have subscribed to the metaverse service. The information related to users includes an advertisement flag. The advertisement flag is set to ON when the user pays an advertising fee. Note that the user information storage section 26 may further store data (for example, data concerning the visual appearance of the avatar) concerning an avatar of each user in the metaverse.

The data processing section 20 includes an entrance management section 30, a metaverse (MV) image generation section 32, an MV sound generation section 34, a vibration generation section 36, an MV data providing section 38, an avatar operation receiving section 40, an avatar control section 42, a payment management section 44, a performance control section 46, and a follower setting section 48.

Functions of the plurality of functional blocks in the data processing section 20 may be implemented in a computer program (hereinafter referred to as a "metaverse management application"). The metaverse management application may be stored in a non-transitory computer readable recording medium and may be installed into the storage of the metaverse server 12 via the recording medium. Alternatively, the metaverse management application may be downloaded via a communication network and installed into the storage of the metaverse server 12. A processor (CPU or the like) of the metaverse server 12 may exhibit the functions of the abovementioned plurality of functional blocks by reading the metaverse management application in the main memory and executing the metaverse management application.

The entrance management section 30 manages the entrance of users to the metaverse. For example, when a user enters the metaverse, the entrance management section 30 may set an entrance flag of the user stored in the user information storage section 26 to ON.

The MV image generation section 32 generates image data in which a virtual space as the metaverse is rendered. The MV image generation section 32 may generate virtual reality image data or augmented reality image data including the elements of the metaverse.

The MV sound generation section 34 generates sound data of the metaverse. The vibration generation section 36 generates vibration data in which the mode of vibration for the user terminal 14 (for example, a controller connected to the user terminal 14) is defined.

The MV data providing section 38 transmits, to the user terminal 14, image data of the metaverse generated by the MV image generation section 32, sound data of the metaverse generated by the MV sound generation section 34, and vibration data generated by the vibration generation section 36.

The avatar operation receiving section 40 receives information that is related to an operation performed by the user on his/her own avatar disposed in the metaverse and that is transmitted from the user terminal 14. The avatar control section 42 moves the avatar corresponding to the user in the metaverse in reference to the user operation information received by the avatar operation receiving section 40.

The payment management section 44 manages payment from the user, and in the first embodiment, manages the payment of the advertising fee from the user. For example, when a notification of payment of the advertising fee from the user is given from the terminal of an administrator of the metaverse server 12, the payment management section 44 sets the advertisement flag of the user stored in the user information storage section 26 to ON.

The performance control section 46 causes a performance of informing other users of the entrance of a user (hereinafter also referred to as an "entrance performance") to be presented in the metaverse, when the user that has entered the metaverse satisfies a predetermined condition (hereinafter also referred to as an "advertising condition"). The entrance performance can also be regarded as an appearance performance that informs other users of the appearance of a user. The advertising condition in the first embodiment is payment of a predetermined amount of advertising fee by the user. When the user pays a predetermined amount of money as the advertising fee to a management company of the metaverse, the advertising condition is satisfied.

A performance includes one of or both a visual expression (for example, a video) and an auditory expression (for example, a sound) that provide enjoyment to users. The entrance performance according to the first embodiment includes at least one of a sound and a video representing the entrance of a user. For example, the performance control section 46 may cause the MV image generation section 32 to generate image data including a special video for entrance performance or cause the MV sound generation section 34 to generate sound data including a special sound for entrance performance. Moreover, the performance control section 46 may cause the vibration generation section 36 to generate vibration data indicating a vibration pattern for entrance performance. The MV data providing section 38 transmits these pieces of image data, sound data, and vibration data to the user terminal 14 and causes the entrance performance to be output on the user terminal 14.

When a first user performs a setting to follow a second user, the follower setting section 48 stores, in the user information storage section 26, data indicating that the first user is following the second user. "Follow" means to make it possible to follow the actions of the followed person. For example, when the first user follows the second user, the first user is notified of the actions and update information of the second user. In this case, the first user can be said to be a follower of the second user. The follower setting section 48 may record, in the user information of the second user, information indicating that the second user is being followed by the first user, that is, information indicating that the first user is a follower of the second user.

An operation of the metaverse system 10 according to the first embodiment that is configured as described above will now be described. Here, each of a user terminal 14a, a user terminal 14b, and a user terminal 14c is operated by a user A, a user B, and a user C, respectively.

FIG. 3 is a flowchart illustrating an operation of the metaverse server 12 according to the first embodiment.

FIG. 3 illustrates processing that is performed in association with the payment of the advertising fee from the user. The payment management section 44 of the metaverse server 12 receives, from an external device, data indicating that a specific user has paid the advertising fee. This external device may be the user terminal 14 of the user who has paid the advertising fee, a terminal (not illustrated) of the administrator of the metaverse server 12, a settlement device, or the like.

When data indicating that a user has paid the advertising fee is received (Y in S10), the payment management section 44 sets the advertisement flag linked to the user and stored in the user information storage section 26 to ON (S12). When data indicating that a user has paid the advertising fee is not received (N in S10), the processing in S12 is skipped.

FIG. 4 is also a flowchart illustrating an operation of the metaverse server 12 according to the first embodiment. FIG. 4 illustrates processing performed in association with the entrance of the user to the metaverse. When a user logs in to the metaverse (Y in S20), the avatar control section 42 of the metaverse server 12 causes the avatar of the logged-in user to appear in the metaverse. Concurrently with this, the performance control section 46 of the metaverse server 12 checks the state of the advertisement flag of the logged-in user (S22). If the advertisement flag of the logged-in user is ON (Y in S24), the performance control section 46 of the metaverse server 12 presents, in the metaverse, the entrance performance related to the logged-in user (S26).

If the advertisement flag of the logged-in user is OFF (N in S24), the processing in S26 is skipped, and the entrance performance related to the logged-in user is not presented. In this case, for example, the avatar of the logged-in user appears in the metaverse in a normal mode. When a user has not logged into the metaverse (N in S20), the processing in S22 and subsequent steps is skipped.

Here, suppose that the user A has paid the advertising fee to the management company of the metaverse. In the following description, a case in which the user A who has paid the advertising fee logs in to the metaverse, that is, an example of an entrance performance presented when the avatar of the user A enters the metaverse, is explained.

The performance control section 46 may present an entrance performance including a special sound (for example, an entrance song or an appearance sound) for informing other users that the user A has logged in, in place of a notice given by a text that reads, for example, "user A has logged in," or in addition to the notice by a text. For example, the performance control section 46 may present such a performance in which the avatar of the user A appears together with an appearance sound, as in the entrance of a wrestler in professional wrestling.

The appearance sound may be a sound designated in advance by the user A or may be a sound that is not output when a user other than the user A logs in. In other words, the appearance sound may be unique content that is output only when the user A logs in. This makes the appearance sound a theme song of the user A and can assist branding of the user A.

Further, the entrance performance may include, in place of or together with the entrance sound, a visual video performance such as a change in light. The video performance may include, for example, contents in which the color of the overall metaverse space is changed, contents in which a background portion of the metaverse changes, and a change of weather conditions. Further, the video performance may have contents in which the ground of the metaverse shakes (an earthquake occurs). The video performance may also be unique content that is output only when the user A logs in, similarly to the entrance sound. That is, the performance control section 46 may present an entrance performance (entrance sound and/or video performance) that has unique contents for each user who has paid the advertising fee.

Further, the entrance performance may include contents for causing the controller connected to the user terminal 14 to vibrate. For example, the performance control section 46 may cause the vibration generation section 36 to generate a signal for generating a special vibration as the entrance performance for the user A. The performance control section 46 may cause the MV data providing section 38 to transmit the signal to the user terminal 14b of the user B and the user terminal 14c of the user C. That is, the performance control section 46 may cause the controller held by the user B and the controller held by the user C to vibrate in a mode indicating the entrance of the user A.

As a modification, the entrance performance may include contents of vibrating the screens (video performance) viewed by the users B and C, instead of vibrating the controllers. For example, the performance control section 46 may cause the content on the screens viewed by the users B and C to be displayed in a vibrating mode, when the entrance performance for the user A is presented. In addition, the entrance performance may include both contents for vibrating the controller and the contents for vibrating the screens viewed by the users.

According to the metaverse server 12 of the first embodiment, making the user who has paid the advertising fee stand out by an entrance performance allows the user to enhance his/her visibility in the metaverse, and, for example, can assist the user in increasing the number of followers in the metaverse. In other words, the metaverse server 12 according to the first embodiment can assist the user who has paid the advertising fee in increasing his/her influence in the metaverse. Moreover, providing such a mechanism for making a person stand out can enhance the appeal of the metaverse and draw in more users to the metaverse. Furthermore, such a mechanism realizes a new business in the metaverse in which advertising fees are gained in exchange for making a person stand out.

The present invention has been explained above based on the first embodiment. A person skilled in the art would recognize that the first embodiment is an example, a combination of the constituent elements and processing processes can be modified in various forms, and such modifications also fall within the scope of the present invention. Modifications will hereinafter be described. The configuration of the modifications can be combined as desired.

A first modification of the first embodiment is described. The performance control section 46 of the metaverse server 12 may change the mode of the entrance performance according to the advertising fee paid by the user. The elements to be changed may include at least one of the length of time of the entrance performance and the volume of the entrance performance. For example, the performance control section 46 may increase the length of time of presenting the entrance performance and/or increase the sound volume of the entrance performance as the user pays higher advertising fees. According to this modification, various kinds of entrance performances according to different amounts of advertising fees can be provided. This increases the user-friendliness of the advertising service and makes it easier to increase the number of users who use advertising.

A second modification of the first embodiment is described. When a plurality of users simultaneously enter the metaverse and at least one user of the plurality of users is paying the advertising fee, the performance control section 46 of the metaverse server 12 may present an entrance performance of informing other users of the entrance of the plurality of users.

The entrance management section 30 of the metaverse server 12 may use a known technology to allow a group configured by a plurality of users to simultaneously enter the metaverse. In this case, the performance control section 46 may check the advertisement flag of each of the plurality of users that simultaneously enter the metaverse. The performance control section 46 may, when the advertisement flag of at least one user of the plurality of users that simultaneously enter the metaverse is ON, present an entrance performance including a video and a sound of contents informing other users that the plurality of users have entered the metaverse at the same time. According to this modification, increasing the number of persons to be advertised can prompt the use of advertising in the metaverse.

A third modification of the first embodiment is explained. The performance control section 46 of the metaverse server 12 may cause an entrance performance of informing other users that a certain user (who is called a "target user" here) has entered the metaverse to be presented on the terminals of the other users who follow the target user (that is, the followers of the target user). Meanwhile, the performance control section 46 may refrain from presenting an entrance performance for the target user, that is, may hide the entrance performance for the target user, on the terminals of users who are not the followers of the target user.

For example, suppose that the user A is a user who has paid the advertising fee and that the user B is a follower of the user A. Further, suppose that the user C is not a follower of the user A and has no connection with the user A. In this case, the performance control section 46 may cause the entrance performance that is to be presented when the user A logs in to the metaverse to be presented, in the metaverse provided to the user terminal 14b of the user B. Meanwhile, the performance control section 46 may refrain from presenting the entrance performance that is to be presented when the user A logs in to the metaverse, in the metaverse provided to the user terminal 14c of the user C. In this modification, users who are to be informed of the entrance of the target user to the metaverse are limited to the followers of the target user. This can prevent users who are to be informed from feeling annoyed.

A fourth modification of the first embodiment is explained. When a certain user (also referred to as the "target user" here) enters the metaverse again after the entrance performance of informing other users of the entrance of the target user has been presented, the performance control section 46 of the metaverse server 12 may cause the entrance performance related to the target user to be presented again on condition that refraining time set beforehand has passed from the previous presentation of the entrance performance related to the target user. The performance control section 46 may cause the user information storage section 26 to store therein date and time at which the entrance performance for the targe user has last been presented. The performance control section 46 may compare, with the refraining time, the length of time that has passed from the date and time at which the entrance performance for the target user has last been presented until the target user enters the metaverse again and thereby decide whether or not to present the entrance performance for the target user.

The refraining time is a period of time in which the performance control section 46 refrains from presenting the entrance performance for the same user. The refraining time may, for example, be set to a value between 30 to 60 minutes. The refraining time may be set to an appropriate value based on the knowledge of the developer of the metaverse server 12 or an experiment using the metaverse system 10. According to this modification, the entrance performance for the same user is presented on condition that a predetermined length of refraining time has passed from the previous presentation of the entrance performance. This makes it possible to avoid excessive presentation of the entrance performance and prevent a user who is to be provided with the entrance performance from feeling annoyed.

### <Second embodiment>

A second embodiment is explained with focus placed on points different from the first embodiment; description on the same points will be omitted as appropriate. Features of the second embodiment can be combined as desired with features of the first embodiment or the modifications thereof. Constituent elements of the second embodiment that are the same as or correspond to the constituent elements of the first embodiment will be described with the same reference signs being assigned as appropriate.

In the metaverse management system according to the second embodiment, a plurality of worlds which can be entered by users are provided in the metaverse. The plurality of worlds are a plurality of virtual spaces that are provided in one or a plurality of metaverses and that are different from one another. The plurality of worlds include, for example, a world that imitates an internal space of a train, a world that imitates an abandoned building, a world in which mini-games are played, and the like. The metaverse management system according to the second embodiment includes a mechanism which puts an advertisement for a certain world in a different world and thereby makes a specific world stand out in the metaverse. This assists the metaverse in enhancing its appeal and drawing in more users.

The configuration of the metaverse system 10 according to the second embodiment is the same as the configuration of the metaverse system 10 according to the first embodiment illustrated in FIG. 1. FIG. 5 is a block diagram illustrating the main functional blocks of the metaverse server 12 according to the second embodiment. The metaverse server 12 according to the second embodiment includes, in addition to the functional blocks of the metaverse server 12 according to the first embodiment, a world information storage section 28, a world management section 50, and an event information acquiring section 52.

The world information storage section 28 stores information related to a plurality of worlds that are to be managed by the metaverse server 12 (hereinafter also referred to as the "world information"). The world information is information concerning the world which has paid the advertising fee, that is, includes information indicating the world which is to be made to stand out. In the second embodiment, the world information includes the advertisement flag, and the advertisement flag of the world which has paid the advertising fee is set to ON.

The payment management section 44 manages payment from the administrator of the world. In the second embodiment, the payment management section 44 manages the payment of the advertising fee from the administrator of the world. For example, when a notification of payment of the advertising fee from a certain world is given from an external device, the payment management section 44 sets the advertisement flag of the world stored in the world information storage section 28 to ON. The external device may be a terminal of the administrator of the metaverse server 12, a terminal of the administrator of the world that has paid the advertising fee, or a settlement device.

In the following description, a world in which an advertising performance for another world is presented is called a first world, and a world to be advertised is called a second world. The first world can also be regarded as a first metaverse, while the second world can also be regarded as a second metaverse. The performance control section 46 controls the performances in a plurality of metaverses (for example, the first world and the second world) which are to be managed by the metaverse server 12.

The world management section 50 manages the current state related to each of the plurality of worlds. For example, the world management section 50 causes the world information storage section 28 to store event information related to events (for example, a concert, a sports event, a game event, and the like) that are currently held in each of the first world and the second world and sequentially updates the event information. The event information may include video data and sound data related to an event in each world.

The event information acquiring section 52 acquires data related to the current state of the second world that is to be advertised. For example, the event information acquiring section 52 acquires event information including video data in which the state of the event currently held in the second world is caught and a sound of the event from the world management section 50 and the world information storage section 28. Note that the world management section 50 may detect that an event has been started in the second world. Upon detecting that an event has been started in the second world, the event information acquiring section 52 may acquire the event information related to the event that is currently being held in the second world.

The performance control section 46 causes a performance that represents the current state of the second world and that is presented for advertising the second world (hereinafter also referred to as the "advertising performance") to be presented in the first world different from the second world. The performance control section 46 causes the advertising performance to be presented in the first world on condition that payment of the advertising fee from the second world side (for example, the administrator of the second world) is recorded in the world information storage section 28. The advertising performance includes at least one of a sound and light representing the event that is currently being held in the second world.

An operation of the metaverse system 10 according to the second embodiment that is configured as described above is described. Here, the metaverse server 12 manages world A and world B. Moreover, it is supposed that the administrator of world B is paying the advertising fee to the administrator of the metaverse server 12 and the advertising performance for world B is presented in world A.

Processing that is to be performed in association with payment of the advertising fee from the administrator of world B is the same as the operation of the metaverse server 12 according to the first embodiment illustrated in FIG. 3. Upon receiving data indicating payment of the advertising fee by the administrator of world B from an external device, the payment management section 44 of the metaverse server 12 sets the advertisement flag linked to world B and stored in the world information storage section 28 to ON.

FIG. 6 is a flowchart illustrating an operation of the metaverse server 12 according to the second embodiment. FIG. 6 illustrates the processing of displaying the advertising performance for world B in world A. The MV image generation section 32 of the metaverse server 12 generates images of world A. The MV data providing section 38 of the metaverse server 12 displays the images of world A on the user terminal 14 (S30).

The performance control section 46 of the metaverse server 12 identifies the world whose advertisement flag is set to ON from among a plurality of worlds that are managed. Here, the performance control section 46 detects that the advertisement flag of world B is ON (Y in S32). The event information acquiring section 52 of the metaverse server 12 acquires event information indicating the state of an event that is currently being held in world B (S34). The performance control section 46 of the metaverse server 12 presents, in world A, the advertising performance based on the event information of world B that has been acquired in S34 (S36). When the advertisement flag of world B is OFF (N in S32), the processing in S34 and subsequent steps is skipped.

In S36, the performance control section 46 may cause the MV image generation section 32 to generate advertising performance images including the event video, in reference to event information. Further, the performance control section 46 may cause the MV sound generation section 34 to generate advertising performance sounds including the sounds of the event. Further, the performance control section 46 may cause the vibration generation section 36 to generate vibration data indicating the vibration pattern for the advertising performance. The MV data providing section 38 may cause the images of world A including the advertising performance for world B to be displayed on the user terminal 14 by transmitting world data (in other words, metaverse data) including the advertising performance images, the advertising performance sounds, and the vibration data to the user terminal 14.

FIG. 7 illustrates an example of the advertising performance. A world image 60 in FIG. 7 is an image provided to a user who has logged in to world A and illustrates the space of world A where the advertising performance for world B is displayed. The world image 60 in FIG. 7 includes an avatar 62 and a subspace 64. The avatar 62 is an avatar operated by the user. The performance control section 46 displays an area of world A where the advertising performance is presented, in a manner different from those for surrounding areas, and displays the area as the subspace 64 in the example illustrated in FIG. 7.

The subspace 64 is an image representing a space where the advertising performance for world B is presented in world A, as a subspace that is different from the normal space in world A. The performance control section 46 may have the images and the sounds representing the state of the event currently being held in world B and having been acquired from the event information acquiring section 52 reproduced in the subspace 64. The user can view the state of the event (for example, a concert, a game event, and the like) currently being held in world B by moving his/her own avatar 62 into the subspace 64.

For example, the performance control section 46 may set the subspace 64 in whole to be semitransparent and look blurry by using a known method such as alpha blending. Moreover, the performance control section 46 may set a boundary between the subspace 64 and the external space thereof to be blurred by a known technology such as alpha blending. In other words, the performance control section 46 may display the boundary between the subspace 64 and the surrounding area in a blurred manner. According to this mode, the subspace 64 where the advertising performance for world B is presented can be blended in world A, making it less likely for users of world A to have a feeling of strangeness but easier to foster users' interest in world B.

FIG. 8 also illustrates an example of the advertising performance. The world image 60 in FIG. 8 also is an image provided to the user who has logged in to world A and illustrates a space of world A where the advertising performance for world B is displayed. The world image 60 in FIG. 8 includes an event venue 66. The event venue 66 is a virtual structure (also referred to as a stadium) in which an event of world B is being held.

For example, the performance control section 46 may cause the MV image generation section 32 to generate a world image 60 in which light of the event currently being held in world B (for example, light from the video in which the current state appears) is leaking from the event venue 66. Further, the performance control section 46 may cause the MV sound generation section 34 to generate a world sound which sounds as if the sounds of the event currently being held in world B (for example, the current sounds) are leaking from the event venue 66. This mode makes it possible to present to the users of world A that an event is being held in world B in an easy-to-understand manner, and also foster the users' interest in world B.

Note that the performance control section 46 may have the images and the sounds representing the state of the event currently being held in world B and having been acquired from the event information acquiring section 52 reproduced in the event venue 66. A user can view the state of the event currently being held in world B by moving his/her own avatar 62 into the event venue 66.

As a modification, the performance control section 46 may cause the controller connected to the user terminal 14 to vibrate when the advertising performance is presented, as in the entrance performance in the first embodiment. Further, the performance control section 46 may cause the content being displayed on the screen viewed by the user (video performance) to vibrate, in other words, cause the content appearing on the screen viewed by the user to be displayed in a vibrating manner, instead of causing the controller to vibrate. Moreover, the performance control section 46 may cause both the controller and the screen to vibrate when the advertising performance is presented. This modification makes it much easier to have the users recognize the advertising performance. Note that the advertising performance itself may include one of or both the vibration of the controller and the new street of the screen.

The metaverse server 12 according to the second embodiment can assist world B in drawing in more users, by causing in world A the advertising performance representing the current state of world B which has paid the advertisement fee to be presented. Moreover, the current state of world B can be presented to the users of world A in an easy-to-understand manner, and interest of the users of world A in world B can be fostered more easily. Further, a new business in the metaverse of gaining advertising fees in exchange for making the world stand out can be realized.

The present invention has been explained above based on the second embodiment. A person skilled in the art would recognize that the second embodiment is an example, a combination of the constituent elements and the processing processes can be modified in various forms, and such modifications also fall within the scope of the present invention.

A modification of the second embodiment is described. The performance control section 46 of the metaverse server 12 may change over time the location in world A where the advertising performance for world B is presented. For example, the performance control section 46 may, when an advertising performance (for example, the subspace 64 in FIG. 7) is displayed at a certain location in world A for a predetermined period of time (for example, one hour), change the setting such that the advertising performance is displayed at a different location in world A. The predetermined period of time may be set to an appropriate value based on the knowledge of the developer of the metaverse server 12 or an experiment using the metaverse system 10. Note that the location where the advertising performance is displayed may be a location determined at random in world A. This mode can provide users with the enjoyment of finding advertising performance in the world, increase the degree of attention to be paid on the advertising performance, and further easily foster interest in the target advertised.

The metaverse server 12 according to the first embodiment or the second embodiment may be realized by cooperation among a plurality of computers as a system, via a communication network. In this case, the functions of the metaverse server 12 according to the first embodiment and the functions of the metaverse server 12 according to the second embodiment may be disposed in a plurality of computers in a distributed manner. The plurality of computers may each include, for example, one or more communication devices, metaverse data generation devices (image generation devices, etc.), and database devices.

Any combination of the abovementioned embodiments and modifications is also effective as embodiments of the present invention. New embodiments generated as a result of the combination have the effects of both the embodiments and modifications combined. Moreover, a person skilled in the art would recognize that the functions to be realized by the components described in the claims are realized by the constituent elements themselves that have been illustrated in the embodiments and the modifications or cooperation between them.

### <Supplement>

The description regarding the embodiments and the modifications described above includes disclosure of the following technology.

### [Technology 1-1]

A metaverse management device including:
an entrance management section that manages entrance of a user to a metaverse; and
a performance control section that causes a performance of informing another user of the entrance of the user to be presented in the metaverse, when the user who has entered the metaverse satisfies a predetermined condition.

According to this metaverse management device, when a user who satisfies a predetermined condition enters a metaverse, another user is informed of the entrance of the relevant user, making it possible to increase the visibility and the degree of influence of the relevant user in the metaverse and to realize a new business of advertising users. Moreover, providing a mechanism for increasing the visibility and the degree of influence of the user makes it possible to draw in more users in the metaverse.

### [Technology 1-2]

The metaverse management device according to technology 1-1, in which
the performance includes at least one of a sound and a video representing the entrance of the user.

This metaverse management device can present entrance of a user to another user, in an easy-to-understand manner.

### [Technology 1-3]

The metaverse management device according to technology 1-1 or 1-2, in which the performance includes at least one of causing a controller of the other user to vibrate and causing content being displayed on a screen that is viewed by the other user to vibrate.

This metaverse management device makes it further easier for another user to recognize the performance of informing another user of the entrance of a user.

### [Technology 1-4]

The metaverse management device according to any one of technologies 1-1 through 1-3, in which the performance control section changes a mode of the performance according to an advertising fee paid from the user.

This metaverse management device can realize various kinds of performances and increase the users of advertising by making a distinction in the performance according to the amount of advertising fee.

### [Technology 1-5]

The metaverse management device according to any one of technologies 1-1 through 1-4, in which the performance control section causes, when a plurality of users enter the metaverse simultaneously and at least one user of the plurality of users is paying the advertising fee, a performance of informing another user of entrance of the plurality of users to be presented.

This metaverse management device can seek an increase in the number of users of advertising by increasing the number of persons that are to be advertised.

### [Technology 1-6]

The metaverse management device according to any one of technologies 1-1 through 1-5, in which the performance control section causes the performance of informing another user of the entrance of the user to be presented on a terminal of the other user who follows the user.

This metaverse management device makes it easier to prevent a user that is to be informed from feeling annoyed, by limiting a user who is to be informed of the entrance of the user to the follower of the relevant user.

### [Technology 1-7]

The metaverse management device according to any one of technologies 1-1 through 1-6, in which the performance control section causes, when the user enters the metaverse again after the performance of informing another user of the entrance of the user has been presented, the performance to be presented again on condition that a predetermined amount of time has passed from the previous presentation of the performance.

This metaverse management device makes it easier to prevent a user who is to be informed from feeling annoyed, by providing an interval of a predetermined amount of time in presenting the performance of informing another user of the entrance of a user.

### [Technology 1-8]

A metaverse management method executed by a computer, including:
a step of managing entrance of a user to a metaverse; and
a step of causing a performance of informing another user of the entrance of the user to be presented in the metaverse, when the user who has entered the metaverse satisfies a predetermined condition.

This metaverse management method produces effects similar to those of the metaverse management device according to technology 1-1.

### [Technology 1-9]

A computer program for causing a computer to realize:
a function of managing entrance of a user to a metaverse; and
a function of causing a performance of informing another user of the entrance of the user to be presented in the metaverse, when the user who has entered the metaverse satisfies a predetermined condition.

This computer program can realize a computer that produces effects similar to those of the metaverse management device according to technology 1-1.

### [Technology 2-1]

A metaverse management device including:
a performance control section that controls a performance in a first metaverse; and
an acquiring section that acquires data related to a current state of a second metaverse different from the first metaverse, in which
the performance control section causes a performance of representing the current state of the second metaverse to be presented in the first metaverse.

This metaverse management device can assist the second metaverse in drawing in more users by causing the performance of representing the current state of the second metaverse to be presented in the first metaverse.

### [Technology 2-2]

The metaverse management device according to technology 2-1, in which the performance control section causes, as the performance, a performance including at least one of a sound and light representing an event that is currently being held in the second metaverse to be presented.

This metaverse management device makes it possible to present to the user of the first metaverse the current state of the second metaverse in an easy-to-understand manner.

### [Technology 2-3]

The metaverse management device according to technology 2-1 or 2-2, in which the performance control section performs at least one of causing a controller of a user to vibrate and causing content that is being displayed on a screen viewed by a user to vibrate, together with the performance.

This metaverse management device makes it further easier for a user to recognize the performance of representing the current state of the second metaverse.

### [Technology 2-4]

The metaverse management device according to any one of technologies 2-1 through 2-3, in which the performance control section causes an area of the first metaverse where the performance is presented to be displayed in a manner different from those for surrounding areas.

This metaverse management device makes it possible to present to the user of the first metaverse in an easy-to-understand manner that the relevant area is the area where the performance representing the current state of the second metaverse is presented.

### [Technology 2-5]

The metaverse management device according to any one of technologies 2-1 through 2-4, in which the performance control section causes a border between an area of the first metaverse where the performance is presented and the surrounding areas to be displayed in a blurred manner.

This metaverse management device makes it less likely for a user of the first metaverse to have a feeling of strangeness, by blurring the boundary between the displayed content of the first metaverse and displayed content of the second metaverse.

### [Technology 2-6]

The metaverse management device according to any one of technologies 2-1 through 2-5, in which the performance control section changes over time a location where the performance is presented in the first metaverse.

This metaverse management device can provide the user of the first metaverse with enjoyment for finding an area where the performance representing the current state of the second metaverse is presented.

### [Technology 2-7]

The metaverse management device according to any one of technologies 2-1 through 2-6, further including:
a storage section that stores payment of an advertising fee from the second metaverse side, in which
the performance control section causes the performance representing the current state of the second metaverse to be presented in the first metaverse, on condition that the advertising fee is paid from the second metaverse side.

This metaverse management device can realize a business of assisting the second metaverse in drawing in more users.

### [Technology 2-8]

A metaverse management method performed by a computer, including:
a step of controlling a performance in a first metaverse; and
a step of acquiring data related to a current state of a second metaverse different from the first metaverse, in which the step of controlling the performance is causing a performance representing the current state of the second metaverse to be presented in the first metaverse.

This metaverse management device produces effects similar to those of the metaverse management device according to technology 2-1.

### [Technology 2-9]

A computer program for a computer to realize:
a function of controlling a performance in a first metaverse; and
a function of acquiring data related to a current state of a second metaverse different from the first metaverse, in which the function of controlling the performance is causing a performance representing the current state of the second metaverse to be presented in the first metaverse.

This computer program can realize a computer that produces effects similar to those of the metaverse management device according to technology 2-1.

### [Industrial Applicability]

The technology according to the present disclosure can be applied to a device and a system for managing metaverses.

### [Reference Signs List]

- 10:: Metaverse system
- 12:: Metaverse server
- 14:: User terminal
- 30:: Entrance management section
- 32:: MV image generation section
- 34:: MV sound generation section
- 38:: MV data providing section
- 44:: Payment management section
- 46:: Performance control section
- 52:: Event information acquiring section

## Claims

1. A metaverse management device comprising:
an entrance management section that manages entrance of a user to a metaverse; and
a performance control section that causes a performance of informing another user of the entrance of the user to be presented in the metaverse, when the user who has entered the metaverse satisfies a predetermined condition.

2. The metaverse management device according to claim 1, wherein the performance includes at least one of a sound and a video representing the entrance of the user.

3. The metaverse management device according to claim 1, wherein the performance includes at least one of causing a controller of the other user to vibrate and causing content that is being displayed on a screen viewed by the other user to vibrate.

4. The metaverse management device according to claim 1, wherein the performance control section changes a mode of the performance according to an advertising fee paid from the user.

5. The metaverse management device according to claim 1, wherein the performance control section causes, when a plurality of users enter the metaverse simultaneously and at least one user of the plurality of users is paying an advertising fee, the performance of informing another user of the entrance of the plurality of users to be presented.

6. The metaverse management device according to claim 1, wherein the performance control section causes the performance of informing another user of the entrance of the user to be presented, on a terminal of the other user who follows the user.

7. The metaverse management device according to claim 1, wherein the performance control section causes, when the user enters the metaverse again after the performance of informing the other user of the entrance of the user has been presented, the performance to be presented again on condition that a predetermined amount of time has passed from the previous presentation of the performance.

8. A metaverse management method performed by a computer,
comprising:
a step of managing entrance of a user to a metaverse; and
a step of causing a performance of informing another user of the entrance of the user to be presented in the metaverse, when the user who has entered the metaverse satisfies a predetermined condition.

9. A computer program for a computer to realize:
a function of managing entrance of a user to a metaverse; and
a function of causing a performance of informing another user of the entrance of the user to be presented in the metaverse, when the user who has entered the metaverse satisfies a predetermined condition.
